**Europäisches Patentamt**

(19) **European Patent Office**

**Office européen des brevets**

(11) Veröffentlichungsnummer : **0 035 527**
**B1**

(12) **EUROPÄISCHE PATENTSCHRIFT**

(45) Veröffentlichungstag der Patentschrift :
29.02.84

(51) Int. Cl.³ : **G 06 K 19/08**

(21) Anmeldenummer : 80901719.7

(22) Anmeldetag : 08.09.80

(86) Internationale Anmeldenummer :
PCT/DE 80/00129

(87) Internationale Veröffentlichungsnummer :
WO WO/81007 (19.03.81 Gazettee 81/07)

(54) VERFAHREN UND VORRICHTUNG ZUM SICHERN VON DATEN.

(30) Priorität : 08.09.79 DE 2936409

(43) Veröffentlichungstag der Anmeldung :
16.09.81 Patentblatt 81/37

(45) Bekanntmachung des Hinweises auf die Patenterteilung : 29.02.84 Patentblatt 84/09

(84) Benannte Vertragsstaaten :
FR NL

(56) Entgegenhaltungen :
DE-A- 1 931 536
FR-A- 2 229 099
FR-A- 2 324 060
US-A- 3 790 754
US-A- 4 025 759

(73) Patentinhaber : Stockburger, Hermann
Kirnachweg 7
D-7742 St. Georgen (DE)

Winderlich, Hans-Georg
Niedere Strasse 36
D-7730 Villingen (DE)

(72) Erfinder : Stockburger, Hermann
Kirnachweg 7
D-7742 St. Georgen (DE)
Erfinder : Winderlich, Hans-Georg
Niedere Strasse 36
D-7730 Villingen (DE)

(74) Vertreter : Prüfer, Lutz H., Dipl.-Phys.
Willroiderstrasse 8
D-8000 München 90 (DE)

## Verfahren und Vorrichtung zum Sichern von Daten

Die Erfindung betrifft ein Verfahren zum Sichern von Daten, die maschinenlesbar in Form mehrerer Einzelzeichen auf einen Datenträger auf gezeichnet werden. Die Erfindung betrifft ferner eine Vorrichtung zum Aufbringen von Daten auf einen Datenträger zur Durchführung dieses Verfahrens mit einem Schreibkopf.

Ein derartiges Verfahren und eine solche Vorrichtung sind aus der US-A-3 790 754 bekannt. Die dort beschriebenen Karten weisen unter der eigentlichen maschinenlesbaren Datenspur eine geheime Information auf, die durch abwechselnde, zufällig verteilte hartmagnetische und weichmagnetische Bereiche gebildet sind. Die Verteilung dieser abwechselnden Bereiche wird bei der Herstellung ein für alle Male festgelegt. Um diese geheime Information auszuwerten, wird die Karte in verschiedenen Stufen magnetisiert, und nach jeder Stufe wird das Ergebnis dieses « Schreibvorganges » ausgewertet. Jede Auswertung ergibt einen Zahlencode, welcher der Karte individuell zugeordnet ist. Der Zahlencode steht in Korrelation zu den sonstigen auf der Karte enthaltenen Informationen, die z. B. optisch lesbar oder eingeprägt sein können. Bei der Prüfung auf Echtheit der Karte wird die geheime Information ermittelt und geprüft, ob sie in der richtigen Korrelation zu den sonstigen Informationen auf der Karte steht. Da die geheimen Informationen bereits bei der Herstellung des Datenträgers angebracht werden müssen, ist die Herstellung einerseits kostspielig, und andererseits müssen die Blankokarten besonders sorgfältig aufbewahrt werden, da sie bereits die geheimen Informationen aufweisen. Ferner ist die Notwendigkeit der erforderlichen Magnetisierung der geheimen Informationsspur in verschiedenen Stufen zum Entnehmen des den physikalischen Daten entsprechenden Zahlencodes bei einem Massenartikel wie solchen Datenträgern ein Nachteil.

Hier will die Erfindung Abhilfe schaffen. Die Erfindung, wie sie in den Ansprüchen gekennzeichnet ist, löst die Aufgabe, ein Verfahren der eingangs genannten Art zu schaffen, mit dem das Fälschen von Daten oder Datenträgern durch Übertragen von Daten von einem beschrifteten Originaldatenträger auf einen anderen Datenträger in wesentlich vereinfachter Weise mit einem einfach herstellbaren Datenträger verhindert wird.

Diese Aufgabe wird durch ein Verfahren gelöst, welches dadurch gekennzeichnet ist, daß nach Aufzeichnung der Daten ausgewählte Einzelzeichen hinsichtlich ihrer durch den Aufzeichnungsvorgang bestimmten physikalischen Eigenschaften ausgewertet werden, und daß auf den Datenträger zusätzliche Angaben über die festgestellten Eigenschaften sowie darüber, welche der Einzelzeichen ausgewählte Einzelzeichen sind, aufgezeichnet werden.

Die Vorrichtung zur Durchführung des Verfahrens ist in Anspruch 8 gekennzeichnet.

Bei den üblichen Aufzeichnungsverfahren werden die Einzelzeichen in der Weise aufgebracht, daß sie sich z. B. hinsichtlich der Farbdichte oder der Magnetfelddichte nicht voneinander unterscheiden. Die Einzelzeichen unterscheiden sich lediglich im Rahmen des Codes, durch den ihr Bedeutungsinhalt festgelegt ist. Wenn es sich um Schriftzeichen handelt, wird der Bedeutungsinhalt durch die Form der Einzelzeichen definiert, bei der bekannten Strichcodierung dagegen durch die Strichbereite bzw. durch die Folge unterschiedlich breiter Einzelstriche. Nach der Erfindung ist ein zusätzliches Unterscheidungskriterium vorhanden, das beispielsweise darin besteht, unterschiedliche Kontraste auszuwerten. So können bei einer Bedruckung des Datenträgers ausgewählte Einzelzeichen mit einer geringeren Schwärzung gedruckt werden als andere Einzelzeichen. Bei einer Echtheitskontrolle des Datenträgers wird mit einer Prüfeinrichtung die Echtheit nur dann festgestellt, wenn die Daten an den vorgesehenen Stellen die erforderlichen physikalischen Eigenschaften haben, also beispielsweise einen bestimmten Grauwert. Druckkontrastschwankungen sind in den Größenordnungen von 20 bis 30 % für das menschliche Auge nicht erkennbar, bei maschineller Abtastung aber gut zu unterscheiden. Eine durch Bedruckung aufgebrachte Kodierung, bei der sich die Grautöne bzw. Farbintensitäten einzelner Zeichen voneinander unterscheiden, wirkt für den Betrachter als gleichförmig, obwohl die Maschine, die eine solche Aufzeichnung liest, Differenzierungen vornehmen kann. Bei Fotografieren bzw. Fotokopieren eines entsprechenden Druckmusters gehen die Unterschiede ebenfalls verloren, so daß die Übertragung des Druckmusters auf einen anderen Datenträger große Schwierigkeiten verursacht. Außerdem kann der Druckgrund der Datenträger ebenfalls farbig sein und sogar von Exemplar zu Exemplar wechseln. Auch ein bildhafter Untergrund kann realisiert werden. Aufgrund dieser spektralen Unterschiede sind dann wieder unterschiedliche analoge Signale zu lesen, deren Pegel in der Höhe und Position erfaßt und als Zusatzinformation ausgewertet werden kann.

In der gleichen Weise können auch magnetische Signale unterschieden werden, indem magnetische Kenngrößen variiert und hinsichtlich ihrer Stärke ausgewertet werden.

Vorzugsweise unterscheiden sich die ausgewählten Einzelzeichen in visuell nicht wahrnehmbarer Form von den übrigen Einzelzeichen. Die Unterscheidbarkeit kann beispielsweise auf einer unterschiedlichen Farbdichte oder in einem unterschiedlichen Kontrast, bezogen auf den Druckgrund, bestehen.

Beim Aufbringen der Daten auf den Datenträger kann nach einem vorgegebenen Programm festgelegt werden, welche Einzelzeichen als « ausgewählte Einzelzeichen », beispielsweise mit einem anderen Grauwert oder mit sonstigen abweichenden Eigenschaften, bedruckt werden sollen als die übrigen Einzelzeichen. Entsprechende Angaben, die zur Identifizierung der ausgewählten Einzelzeichen dienen, werden daneben als normale Daten auf den Datenträger aufgedruckt. Bei der Auswertung kann wiederum festgestellt werden, welche Einzelzeichen in ihren physikalischen Eigenschaften von den übrigen Einzelzeichen abweichen, um auf diese Weise die Zusatzinformation wiederzugewinnen. Diese Zusatzinformation kann in digitale Formen umgewandelt und mit den entsprechenden zusätzlichen Angaben auf dem Datenträger verglichen werden, wobei nur bei Übereinstimmung die Echtheit des Datenträgers festgestellt wird.

Eine weitere Möglichkeit besteht darin, einen Datenträger, der beispielsweise mit einem Grautonmuster versehen ist, mit den aufzubringenden Daten zu bedrucken und die Bedruckung anschließend mit einer Leseeinrichtung abzutasten, die für die Einzeldaten den Kontrast relativ zu dem jeweiligen Untergrund feststellt. Durch eine zusätzliche Bedruckung können Informationen über die Kontraste verschiedener Einzeldaten aufgezeichnet werden. Ein so gekennzeichneter und bedruckter Datenträger ist praktisch sicher gegen Duplizierung, insbesondere dann, wenn das Datenträger-Rohmaterial Grautonmuster in willkürlicher Verteilung aufweist, die sich von Exemplar zu Exemplar unterscheiden. Selbst wenn es einem Fälscher gelingt, sich das Rohmaterial zu beschaffen, könnte er die Information von dem Original-Datenträger nicht auf das Rohmaterial übertragen, ohne die Art der speziellen Kodierung und der Kontrastauswertung an den Einzelzeichen zu kennen.

Im folgenden wird unter Bezugnahme auf die Figuren ein Ausführungsbeispiel der Erfindung näher erläutert.

Figur 1 zeigt schematisch eine Informationsspur eines Datenträgers, der mit maschinenlesbaren Zeichen bedruckt ist ;

Figur 2 zeigt schematisch eine Vorrichtung zur Aufzeichnung einer Zusatzinformation auf den Datenträger ;

Figur 3 zeigt verschiedene Arten der Kennzeichnung ausgewählter Einzelzeichen ; und

Figur 4 zeigt ein Blockschaltbild einer Leseeinrichtung zum Auswerten der Zusatzinformationen.

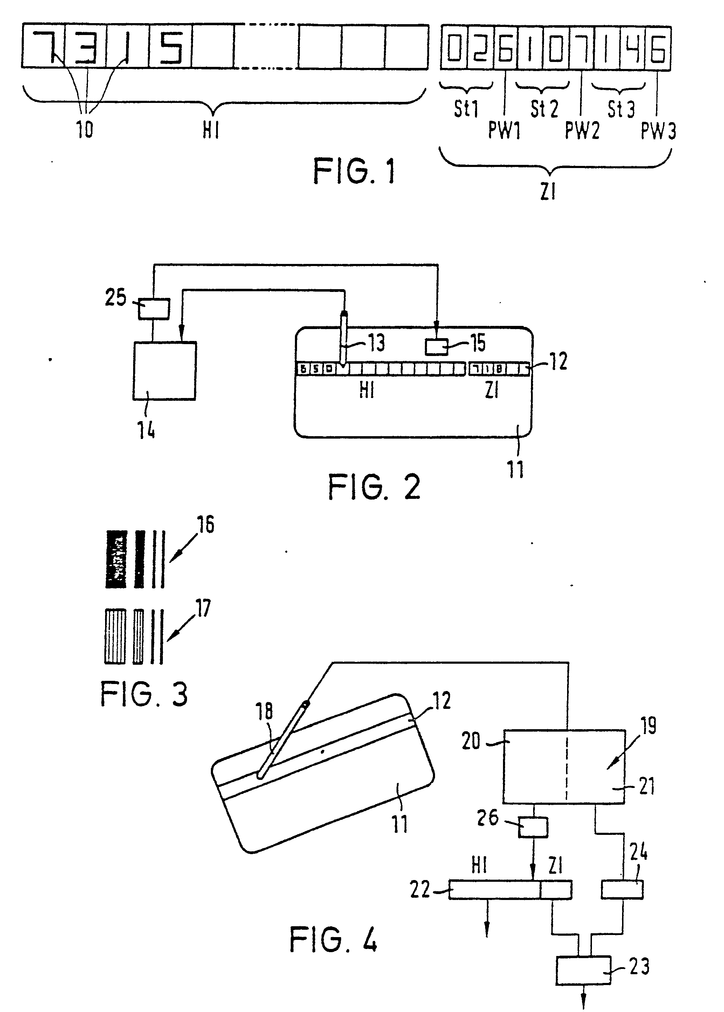

In Fig. 1 ist die Informationsspur eines Datenträgers dargestellt. Die Einzelzeichen 10 sind in Form maschinenlesbarer Zeichen in einer Reihe der Informationsspur enthalten, wobei für jede Ziffer ein eigenes Feld vorgesehen sein kann. Die Hauptinformation HI kann nach bekannten Verfahren kodiert oder verschachtelt sein, damit ihr Bedeutungsinhalt nicht ohne weiteres feststellbar ist. An die Hauptinformation HI schließt sich eine Zusatzinformation ZI an, die ebenfalls aus maschinenlesbaren Ziffern besteht.

Die Ziffern der Hauptinformation unterscheiden sich hinsichtlich ihrer Schwärzung bzw. hinsichtlich ihres Kontrastes gegenüber dem Druckgrund geringfügig voneinander. Diese Unterschiede sind für das menschliche Auge nicht feststellbar, können jedoch bei maschineller Auswertung der Schriftzeichen erkannt werden. Die Zusatzinformation ZI enthält entsprechende Angaben über die ausgewählten Schriftzeichen und den Pegelwert ihrer Grautöne. Im vorliegenden Fall stellen drei Schriftzeichen « ausgewählte Schriftzeichen » dar. Es sind dies das zweite, zehnte und vierzehnte Schriftzeichen. Die Nummer gibt hierbei jeweils die Stelle des betreffenden Schriftzeichens innerhalb der Hauptinformation HI an. Die Zusatzinformation ZI enthält die Angaben über die Stellen, die die ausgewählten Schriftzeichen innerhalb der Hauptinformation HI einnehmen. Im vorliegenden Fall ist die Stelle 1 St 1 die zweite Position, die durch die Ziffern 02 gekennzeichnet ist. An dieser Stelle steht bei dem Ausführungsbeispiel nach Fig. 1 die maschinenlesbare Zahl « 3 ». Die zweite ausgewählte Stelle St 2 befindet sich an der Position 10 und die dritte ausgewählte Stelle St 3 befindet sich an der Position 14 in der Hauptinformation HI. Zusätzlich zu den Positionen, an denen sich die ausgewählten Einzelzeichen bzw. Schriftzeichen befinden, ist in der Zusatzinformation ZI jeweils der Pegelwert der betreffenden Schriftzeichen angegeben, d. h. der Grauwert, mit dem die Schriftzeichen gedruckt sind. Der Pegelwert PW1 für das Schriftzeichen in der zweiten Position beträgt 6, der Pegelwert PW2 für das Schriftzeichen in der zehnten Position beträgt 7 und der Pegelwert PW3 für das Schriftzeichen in der vierzehnten Position beträgt 6.

Bei der Auswertung des Datenträgers werden von einer Lesevorrichtung die Grauwerte der ausgewählten Schriftzeichen der Hauptinformation HI festgestellt und mit den Pegelwerten PW1, PW2 und PW3 verglichen. Nur bei Übereinstimmung wird die Echtheit der aufgezeichneten Information, die aus der Hauptinformation HI und der Zusatzinformation ZI besteht, festgestellt.

Figur 2 zeigt schematisch eine Vorrichtung zum Aufbringen der Zusatzinformation ZI. Der für die Hauptinformation HI bestimmte Teil der Informationsspur 12 eines Datenträgers 11 ist bereits mit der Hauptinformation HI beschriftet, wobei beispielsweise die Grauwerte der einzelnen Schriftzeichen voneinander abweichen. Die Beschriftung wird mit einem Lesekopf 13 abgetastet, der für jedes Schriftzeichen ein der Farbdichte bzw. dem Farbkontrast zum Untergrund entsprechendes Signal an eine Kodiereinrichtung 14 abgibt. In der Kodiereinrichtung 14 wird das dem Grauwert entsprechende Signal in ein Digitalsignal umgewandelt. Außerdem werden in dem Kodierer 14 fortlaufend die von dem Lesekopf 13 überstrichenen Stellen gezählt. Die Kodiereinrichtung 14 erzeugt die Schriftzeichen St1, St2, St3 zur Kennzeichnung der ausgewählten Positionen bzw. Schriftzeichen und außerdem die Pegelwerte PW1, PW2 und PW3. Sie steuert einen Verschlüßler 25, der eine Umschachtelung bzw. Umordnung der Schriftzeichen nach festgelegten Gesetzmäßigkeiten vornimmt, einen Schreibkopf 15, der im Anschluß an die Hauptinformation HI die Zusatzinformation ZI auf den Datenträger 11 aufdruckt.

Für die Zusatzinformation ZI können entweder die ohnehin vorhandenen Kontrastschwankungen bei der Aufzeichnung der Hauptinformation HI ausgewertet werden, wie bei dem oben beschriebenen Ausführungsbeispiel, es können aber auch bewußt Kontrastschwankungen bzw. unterschiedliche Grautöne oder Spektralverteilungen erzeugt werden. Um dies zu verdeutlichen, ist in Fig. 3 ein Schriftzeichen 16 nach dem bekannten Strichkode dargestellt, bei dem jedes Schriftzeichen aus einer Kombination breiter und schmaler Striche besteht. Der Kontrast der Striche des Schriftzeichens 16, bezogen auf den Untergrund, kann bewußt oder zufällig variiert werden.

Bei dem Zeichen 17 in Fig. 3 bestehen die dickeren Striche aus mehreren dicht nebeneinanderliegenden dünnen Einzelstrichen. Dadurch kann einerseits der Grauwert des Schriftzeichens beeinflußt werden, indem der Strichabstand der dünnen Einzelstriche entsprechend gewählt wird. Das Schriftzeichen 17 bietet außerdem eine weitere Möglichkeit der Auswertung mit zwei Leseköpfen, von denen der eine ein solches optisches Auflösungsvermögen hat, daß er die Einzelstriche erkennt, während der andere ein geringeres Auflösungsvermögen hat und nur einen bestimmten Grauton feststellt. Schriftzeichen der mit 16 und 17 bezeichneten Art können innerhalb einer Aufzeichnung gemischt vorkommen, wobei beispielsweise die Schriftzeichen 17 « ausgewählte Schriftzeichen » darstellen.

Figur 4 zeigt das Blockschaltbild einer Leseeinrichtung zum Lesen der Informationsspur 12 eines Datenträgers 11. Ein Lesekopf 18 tastet die Informationsspur 12 ab und gibt Signale an eine Einrichtung 19, die einen Leseteil 20 und einen Meßteil 21 aufweist. Von dem Leseteil 20 gelangt die Gesamtinformation aus der Hauptinformation HI und der Zusatzinformation ZI nach Entschlüsselung in einem Entschlüßler 26, in dem die richtige Reihenfolge der Schriftzeichen wiederhergestellt wird, in ein Register 22, aus dem die Hauptinformation HI ausgelesen werden kann. Der für die Zusatzinformation ZI bestimmte Teil des Registers 22 ist mit einem Eingang eines Komparators 23 verbunden.

In dem Meßteil 21 werden die Pegelwerte der ausgewählten Schriftzeichen bestimmt und in Digitalwerte umgesetzt. Auf diese Weise wird die Zusatzinformation ZI durch Helligkeitsmessung wiedergewonnen und in digitaler Form in ein zweites Register 24 eingegeben. Der Ausgang des Registers 24 ist mit dem zweiten Eingang des Komparators 23 verbunden. Wenn in dem Komparator 23 Koinzidenz zwischen der lesenden Zusatzinformation ZI und der gemessenen Zusatzinformation, die in dem Register 24 gespeichert ist, festgestellt wird, wird die Echtheit

des Datenträgers festgestellt.

## Ansprüche

1. Verfahren zum Sichern von Daten, die maschinenlesbar in Form mehrerer Einzelzeichen auf einen Datenträger aufgezeichnet werden, dadurch gekennzeichnet, daß nach Aufzeichnung der Daten ausgewählte Einzelzeichen hinsichtlich ihrer durch den Aufzeichnungsvorgang bestimmten physikalischen Eigenschaften ausgewertet werden, und daß auf den Datenträger zusätzliche Angaben über die festgestellten Eigenschaften sowie darüber, welche der Einzelzeichen ausgewählte Einzelzeichen sind, aufgezeichnet werden.

2. Verfahren nach Anspruch 1, dadurch gekennzeichnet, daß die zusätzlichen Angaben die Positionen der ausgewählten Einzelzeichen umfassen.

3. Verfahren nach Anspruch 1 oder 2, dadurch gekennzeichnet, daß verschiedene Einzelzeichen mit zueinander unterschiedlichen physikalischen Eigenschaften auf den Datenträger eingeschrieben werden.

4. Verfahren nach Anspruch 3, dadurch gekennzeichnet, daß das Einschreiben der Einzelzeichen zu diesem Zweck mittels verschiedener Schreibköpfe erfolgt.

5. Verfahren nach Anspruch 4, dadurch gekennzeichnet, daß als ausgewählte Einzelzeichen die mit einem der Schreibköpfe geschriebenen gewählt werden.

6. Verfahren nach einem der vorhergehenden Ansprüche, dadurch gekennzeichnet, daß die ausgewählten Einzelzeichen sich in ihrer Farbdichte von den anderen Einzelzeichen unterscheiden.

7. Verfahren nach einem der vorhergehenden Ansprüche, dadurch gekennzeichnet, daß der relative Kontrast oder die Spektralverteilung der ausgewählten Einzelzeichen gegenüber dem Untergrund ausgewertet werden.

8. Vorrichtung zum Aufbringen von Daten auf einen Datenträger zur Durchführung des Verfahrens nach einem der vorhergehenden Ansprüche mit einem Schreibkopf, dadurch gekennzeichnet, daß ein weiterer Schreibkopf (15) vorgesehen ist, mit dem einzelne der Daten in zueinander meßbar unterschiedlicher Weise aufschreibbar sind, und daß eine Codiereinrichtung (14) vorgesehen ist, die derart ausgebildet ist, daß sie den weiteren Schreibkopf (15) derart steuert, daß dieser Angaben (St1, St2, St3) über diejenigen Positionen solcher einzelner Daten aufzeichnet, die von dem anderen Schreibkopf geschrieben und von einem Lesekopf (13) gelesen worden sind.

## Claims

1. Method of securing data recorded on a data support in the form of a plurality of individual characters adapted for automatic reading, characterized in that after recording the data selected individual characters are evaluated with respect to their physical properties determined by the recording process, and that there is recorded on the data support additional information on the detected properties as well as on those individual characters being selected individual characters.

2. Method of claim 1, characterized in that the additional information comprises the positions of the selected individual characters.

3. Method of claim 1 or 2, characterized in that several individual characters having physical properties differing from one to the other are inscribed on the data support.

4. Method of claim 3, characterized in that to this end the inscribing of the individual characters is performed by different writing heads.

5. Method of claim 4, characterized in that as selected characters those characters are selected which are written by one of the writting heads.

6. Method of any of the preceding claims, characterized in that the selected individual characters differ from the other individual characters by their colour density.

7. Method of any of the preceding claims, characterized in that the relative contrast or the spectral distribution of the selected individual characters with respect to the background is evaluated.

8. Device for applying data on a data support for performing the method of any of the preceding claims having a writing head, characterized in that a further writing head (15) for applying individual data in a measurably differing manner with respect to each other and a coding means (14) is provided which is adapted to control the further writing head (15) such that the latter records information (ST1, St2, St3) on those positions of such individual data which are written by the other writing head and are read by a reading head (13).

**Revendications**

1. Procédé pour protéger des données qui sont enregistrées sur un support de données sous la forme de plusieurs signes élémentaires dans un mode susceptible de lecture à la machine, caractérisé en ce que, après l'enregistrement des données, des signes élémentaires sélectionnés sont analysés selon leurs propriétés physiques définies par l'opération d'enregistrement, et en ce que des indications additionnelles relatives aux propriétés détectées ainsi qu'à l'identification des signes élémentaires sélectionnés, sont enregistrées sur le support de données.

2. Procédé selon la revendication 1, caractérisé en ce que les indications additionnelles comprennent les positions des signes élémentaires sélectionnés.

3. Procédé selon la revendication 1 ou la revendication 2, caractérisé en ce que différents signes élémentaires possédant des propriétés physiques distinctes sont inscrits sur le support de données.

4. Procédé selon la revendication 3, caractérisé en ce que l'inscription des signes élémentaires dans ce but s'effectue au moyen de différentes têtes d'écriture.

5. Procédé selon la revendication 4, caractérisé en ce qu'on choisit, comme signes élémentaires sélectionnés, ceux qui sont inscrits avec l'une des têtes d'écriture.

6. Procédé selon l'une quelconque des revendications précédentes, caractérisé en ce que les signes élémentaires sélectionnés se distinguent des autres signes élémentaires par leur densité d'encrage.

7. Procédé selon l'une quelconque des revendications précédentes, caractérisé en ce qu'on analyse le contraste relatif ou la répartition spectrale des signes élémentaires sélectionnés par rapport au fond.

8. Dispositif pour former des données sur un support de données, pour la mise en œuvre du procédé selon l'une des revendications précédentes, comportant une tête d'écriture, caractérisé en ce qu'il est prévu une autre tête d'écriture (15) permettant d'inscrire différemment certaines des données sous une forme mesurable, et en ce qu'il est prévu un dispositif de codage (14) qui est constitué de manière à commander ladite tête d'écriture (15) de façon que celle-ci enregistre les indications (St1, St2, St3) relatives aux positions des données individuelles écrites par l'autre tête d'écriture et lues par la tête de lecture (13).

FIG. 1

FIG. 2

FIG. 3

FIG. 4